# EUROPÄISCHE PATENTSCHRIFT

(11) **EP 2 695 508 B1**
(45) Veröffentlichungstag und Bekanntmachung des Hinweises auf die Patenterteilung: **27.05.2015**
(21) Anmeldenummer: 13002920.0
(22) Anmeldetag: 06.06.2013
(51) Int. Cl.: A01C 7/08

(54) **Verteilerkopf für eine Sä- und/oder Düngemaschine**
Distribution head for a sowing or fertilising machine
Tête de répartition pour une machine à semence ou à engrais

(30) Priorität: 09.08.2012 DE 102012015731
(43) Veröffentlichungstag der Anmeldung: 12.02.2014
(73) Patentinhaber: Alois Pöttinger Maschinenfabrik Ges.m.b.H., 4710 Grieskirchen (AT)
(72) Erfinder: Kirchmayr, Alois, 4070 Pupping (AT); Preimeß, Hans-Jörg, 4710 Grieskirchen (AT); Stadlbauer, Franz, 4633 Kematen (AT)
(74) Vertreter: Thoma, Michael

(56) Entgegenhaltungen:
- EP-A2- 0 799 560
- WO-A1-97/21338
- DE-A1- 19 523 841
- DE-U1- 9 313 779
- US-A- 4 480 794

## Beschreibung

Die vorliegende Erfindung betrifft einen Verteilerkopf für eine landwirtschaftliche Verteilmaschine, insbesondere Sä- und/oder Düngemaschine, zum pneumatischen Verteilen von Verteilgut wie Saatgut, Dünger oder dergleichen, mit einem aufrechten, zentralen Steigrohr zum Zuführen des Verteilguts in eine vorzugsweise pilzkopfförmige Verteilerkammer, von der über den Umfang der Verteilerkammer verteilt eine Mehrzahl von Auslässen abgeht, die vom Verteilerkopf weg zu Ausbringelementen der Verteilmaschine führen, wobei zumindest ein Blockierelement zum wahlweisen Blockieren oder Freigeben von zumindest einem Auslass und eine Rückführeinrichtung zur Rückführung des Verteilguts von einem blockierten Auslass in das Steigrohr vorgesehen ist.

Sä- bzw. Düngemaschinen mit pneumatischen Verteilerköpfen sind beispielsweise aus den Schriften WO 97/21338 A1, DE 93 13 779 U1, DE 195 23 841 A1, EP 0 799 560 A2 oder US 4,480,794 bekannt.

Bei pneumatisch arbeitenden Sämaschinen werden üblicherweise mit Hilfe eines Luftstroms Saatgut, Dünger oder ähnliche körnige Stoffe aus einem Saatgutbehälter durch ein Rohr zu einem Verteilerkopf geführt, in dem das Saatgut bzw. der Dünger oder dergleichen auf eine Mehrzahl von Auslässen verteilt wird, die über Rohre, Schläuche oder dergleichen mit entsprechenden Ausbringelementen verbunden sind, die in Reihe nebeneinander bzw. versetzt hintereinander angeordnet sind. Über diese Ausbringelemente wird das auszubringende Gut in mehreren Reihen nebeneinander auf dem bzw. in dem Boden abgelegt. Der Verteilerkopf sorgt hierbei dafür, dass das Saatgut zumindest näherungsweise gleichmäßig auf die im Verteilerkopf angeordneten Auslässe und die damit verbundenen Ausbringelemente verteilt wird. Üblicherweise umfasst der Verteilerkopf hierzu einen zumindest näherungsweise rotationssymmetrischen, grob gesprochen pilzkopfförmigen Verteilerraum, dem durch ein zentrales Zuführrohr das Saatgut über einen Luftstrom eingeblasen wird, so dass sich das Saatgut in dem Verteilerraum auf die außenliegend angeordneten Auslässe verteilt.

Bei bestimmten Getreidesorten, beispielsweise bei Weizen, hat das Saatgut eine kleine Kornabmessung und kann in relativ engen Reihen und mit kleinen Abständen zwischen den Saatgutkörnern in der jeweiligen Reihe gesät werden. Bei anderen Sorten hingegen, beispielsweise bei Mais, mit einer größeren Kornabmessung wird normalerweise ein größerer Abstand zwischen den Reihen und auch zwischen den Körnern benötigt. Es ist daher üblich, verschiedene Sämaschinen für diese verschiedenen Getreidesorten zu verwenden.

Allerdings ist es auch bereits bekannt geworden, dieselbe Sämaschine für das Ausbringen verschiedener Getreidesorten zu verwenden. Um hier den Reihenabstand für das abgelegte Gut verändern zu können, wurde vorgeschlagen, in dem Verteilerkopf Blockierelemente einzusetzen, die beispielsweise jeden zweiten Auslass blockieren, so dass das Saatgut nur in jeden wiederum zweiten Auslass eintreten kann und über eine entsprechend verringerte Anzahl von Ausbringelementen ausgebracht wird. Beispielsweise schlägt die DE 10 2005 008 290 A1 vor, Blockierelemente mit einem keilförmigen Kopf in einzelne Auslässe des Verteilerkopfes einzustecken. Aus der DE 10 2005 038 216 A1 ist es bekannt, einzelne Auslässe eines solchen pneumatisch arbeitenden Verteilerkopfes mittels Schieber absperren zu können. Durch das Blockieren einzelner Auslässe ergeben sich jedoch Probleme hinsichtlich der Luftführung. Durch das Abdecken einzelner Auslässe kann in den nicht abgedeckten Auslässen eine zu hohe Strömungsgeschwindigkeit hervorgerufen werden, was zwar durch ein Verringern des Luftstroms insgesamt kompensiert werden könnte, was jedoch wiederum dazu führen kann, dass der Luftstrom im Zuführrohr nicht mehr ausreichend stark ist, um die Saatgutkörner mitzunehmen. Zum anderen kann es ggf. auch zu einem sogenannten "Kaffeemühleneffekt" kommen, wonach die Saatgutkörner durch Abprallen an den Blockierelementen beginnen, kreisbahnförmig in dem Verteilerkopf umhergewirbelt zu werden, anstatt in einen der noch offen gebliebenen Auslässe einzutreten.

Um beim Abschalten einzelner Auslässe die Strömungsverhältnisse in der Verteilerkammer möglichst unbeeinflusst zu lassen, wurde auch bereits vorgeschlagen, das Saatgut an den entsprechenden Auslässen an sich ungehindert austreten zu lassen, jedoch nicht zu den Ausbringelementen der Sä- bzw. Düngemaschine zu leiten, sondern in das Zufuhrsystem rückzuführen, beispielsweise indem die von den Auslässen des Verteilerkopfes abgehenden Schläuche umgesteckt werden, d.h. von den Ausbringelementen abgesteckt und beispielsweise am Saatguttank eingesteckt werden. Eine solche Lösung zeigt beispielsweise die Schrift DE 87 08 456. Um das manuelle Umstecken der Saatgutleitungen zu vermeiden, wurde auch bereits vorgeschlagen, an den Auslässen des Verteilerkopfes umschaltbare Weichen vorzusehen, um das zu verteilende Saatgut wahlweise in den zu einem Ausbringelement führenden Auslass oder in eine Rückführleitung zu führen. Die Schrift DE 196 13 785 C1 zeigt eine solche umschaltbare Weiche, die zwei verschwenkbare Klappen besitzt, um wahlweise den regulären Auslass oder den abzweigenden Rückführkanal zu sperren. Der Rückführkanal ist über einen Schlauch mit einem Sammler verbunden, der das rückgeführte Saatgut in eine ein Zellenrad aufweisende Dosiereinrichtung leitet.

Die Schrift EP 0 752 203 B1 zeigt einen ähnlichen Verteilerkopf, bei dem eine ähnliche Weiche auf den Auslässen des Verteilerkopfes sitzt, um das über die Auslässe ausströmende Saatgut wahlweise über Schläuche zu den Ausbringelementen oder in einen Rückführschlauch zu leiten, welcher in das Steigrohr des Verteilerkopfes führt. Über die genannten Rückführschläuche wird das Saatgut bei einem jeweils abgesperrten Ausbringelement direkt in das Steigrohr rückgeführt, wobei die Dosiereinrichtung die zudosierte Saatgutmenge entsprechend reduziert, um die rückgeführte Erntegutmenge zu berücksichtigen und trotz der Rückführung eine gleichmäßige Ausbringmenge in den nicht abgesperrten Ausbringelementen zu erreichen. Um die Mitnahme des rückgeführten Saatguts im Steigrohr zu gewährleisten, ist im Steigrohr eine düsenförmige Verjüngung vorgesehen, um den Luftstrom zu beschleunigen und das mit einer gegenläufigen Bewegungskomponente rückgeführte Saatgut mitzureißen. Letzteres ist an sich nicht ganz einfach, da das durch die Rückführschläuche rückgeführte Saatgut durch den auch in die Rückführschläuche eintretenden Luftstrom der Transportrichtung im Steigrohr entgegen eingeblasen wird.

Der vorliegenden Erfindung liegt die Aufgabe zugrunde, einen verbesserten Verteilerkopf der eingangs genannten Art zu schaffen, welcher Nachteile des Standes der Technik vermeidet und Letzteren in vorteilhafter Weise weiterbildet. Insbesondere soll eine verbesserte Rückführung des Verteilguts in das Steigrohr erzielt werden, die das Mitnehmen des Verteilguts im Steigrohr des Verteilerkopfes erleichtert.

Erfindungsgemäß wird diese Aufgabe durch einen Verteilerkopf gemäß Anspruch 1 gelöst. Bevorzugte Ausführungen der Erfindung sind Gegenstand der abhängigen Ansprüche.

Es wird also vorgeschlagen, die Rückführung des Ernteguts von den jeweils gesperrten Auslässen nicht mehr über einzelne, den jeweiligen Auslässen zugeordnete Rückführschläuche zu bewerkstelligen, sondern allen sperrbaren Auslässen des Verteilerkopfes eine gemeinsame Sammelrückführung zuzuordnen, die entsprechend großvolumig ausgebildet sein kann und die Rückführgeschwindigkeiten deutlich reduziert. Erfindungsgemäß ist die Rückführeinrichtung von einem das Steigrohr umgebenden Trichter gebildet, der mit seinem oberen Rand an die Verteilerkammer anschließt und mit seinem unteren Ende in das Steigrohr übergeht, so dass ein oberer Teil des Steigrohrs im Inneren der Trichterkammer liegt. Durch das Einleiten des rückgeführten Verteilguts in eine großvolumige Trichterkammer, die an den Boden der Verteilerkammer anschließt, verliert die das Verteilgut fördernde Druckluft deutlich ihre Förderwirkung bzw. -geschwindigkeit, so dass das rückgeführte Verteilgut deutlich an Geschwindigkeit verliert und im Wesentlichen nur von der Schwerkraft getrieben an der Trichterwandung herunterrutscht bzw. -rollt. Hierdurch ist die Eintrittsgeschwindigkeit in das Steigrohr und insbesondere die nach unten gerichtete Bewegungskomponente des rückgeführten Verteilguts deutlich geringer, wodurch es dem nach oben gehenden Luftstrom im Steigrohr deutlich einfacher gelingt, die rückgeführten Körner mitzureißen. Überraschenderweise beeinträchtigt die deutliche Querschnittsaufweitung, die für den rückgeführten Luftstrom am Übergang in den Trichterraum hinein eintritt, die Strömungsverhältnisse im Inneren der Verteilerkammer kaum. Bislang wurde immer der Ansatz vertreten, dass auch die Rückführleitungen im Wesentlichen denselben Querschnitt haben müssen wie die zu den Ausbringelementen führenden Ausbringleitungen, um bei einer Umschaltung von Ausbringen auf Rückführen die Strömungsverhältnisse in der Verteilerkammer nicht zu beeinflussen. Bei der vorgeschlagenen Trichterlösung jedoch tritt der Druckabfall erst stromab bzw. außerhalb der Verteilerkammer in dem Trichterraum auf, insbesondere dann, wenn die in den Trichter mündenden Rückführ- bzw. Bypassöffnungen dieselbe Querschnittsfläche besitzen wie die zu den Ausbringelementen führenden Auslässe.

In Weiterbildung der Erfindung kann der obere Rand des Trichters derart bemessen sein, dass der genannte obere Rand an die Verteilerkammer in einem Bereich eines äußeren Randabschnitts der Verteilerkammer anschließt. Vorteilerhafterweise kann die genannte Verteilerkammer radial innerhalb des oberen Trichterrands in ihrer Bodenwandung Bypassöffnungen besitzen, die in den von dem Trichter umschlossenen Trichterraum münden. Insbesondere kann der Rückführtrichter derart ausgebildet sein, dass der obere Rand im Wesentlichen von unten her an den Außenumfang bzw. einen daran angrenzenden Abschnitt des Bodens der Verteilerkammer anschließt, so dass der Trichter im Wesentlichen die gesamte Bodenseite der Verteilerkammer umgreift bzw. daran anschließt.

Grundsätzlich könnte der Trichter nach Art eines Auffangtrichters ein Stück weit vom Boden der Verteilerkammer beabstandet angeordnet sein und von Letzterer durch einen Spalt getrennt sein. Herabfallendes, rückgeführtes Verteilgut würde wie ein Regentropfen aufgefangen und im Trichter weiter nach unten auf das Steigrohr zugeleitet werden. In vorteilhafter Weiterbildung der Erfindung jedoch schließt der Trichter mit seinem oberen Trichterrand spaltfrei an die Wandung der Verteilerkammer an, insbesondere an den Boden der Verteilerkammer, wobei zwischen dem Trichter und der Wandung der Verteilerkammer eine feste, staub- und/oder luftdichte Verbindung vorgesehen sein kann, beispielsweise in Form einer Steckverbindung oder auch einer stoffschlüssigen Verbindung beispielsweise im Sinne einer integral einstückigen Ausbildung von Trichter und Verteilerkammerboden.

Die bodenseitigen Bypassöffnungen der Verteilerkammer können in Weiterbildung der Erfindung durch Verschlusselemente verschlossen und geöffnet werden, die in Abhängigkeit der Stellung der Blockierelemente, die die regulären Auslässe zu den Ausbringelementen blockieren, gesteuert sind, insbesondere derart, dass bei einem blockierten Blockierelement die zugehörige Bypassöffnung, die dem blockierten Auslass zugeordnet ist, geöffnet und bei nicht blockiertem Blockierelement eine zugehörige Bypassöffnung verschlossen ist.

Die genannten Blockierelemente können grundsätzlich verschieden ausgebildet sein, beispielsweise in Form einsetzbarer und herausnehmbarer Umleitkeile wie sie in der Schrift EP 1 994 815 A1 gezeigt sind, wobei der vorgenannte Steuermechanismus in diesem Fall beispielsweise dadurch realisiert sein kann, dass beim Einsetzen der Blockierelemente Stellklappen niedergedrückt werden, die die Bypassöffnungen öffnen. Alternativ zu herausnehmbaren Blockierelementen können die genannten Blockierelemente auch in Form von Ventilelementen beispielsweise in Form von Ventilschiebern oder Ventilklappen ausgebildet sein, die mit den Verschlusselementen für die Bypassöffnungen gekoppelt sein können, insbesondere derart, dass bei Öffnen der Ventilelemente für die regulären Auslässe die Verschlusselemente der Bypassöffnungen schließen und umgekehrt.

In Weiterbildung der Erfindung können die Blockierelemente und die genannten Verschlusselemente für die Bypassöffnungen auch jeweils durch ein gemeinsames verstellbares Ventilelement gebildet sein, vorzugsweise in Form eines Ventilschiebers oder einer Ventilklappe, wobei das genannte gemeinsame Ventilelement nach Art einer Weiche zwischen zwei Stellungen hin und her schaltbar sein kann derart, dass das Ventilelement in einer ersten Stellung die Bypassöffnung verschließt und die reguläre Auslassöffnung freigibt und umgekehrt in einer zweiten Stellung den genannten Auslass verschließt, aber die Bypassöffnung freigibt. In Weiterbildung der Erfindung kann bei einer bodenseitig vorgesehenen Bypassöffnung und umfangsseitig abgehenden Auslässen der Verteilerkammer eine Ventilklappe um eine bodenseitig angeordnete, liegende Achse schwenkbar gelagert sein derart, dass die Ventilklappe einerseits auf die bodenseitige Bypassöffnung schwenkbar ist oder andererseits aufrichtbar auf die Auslassöffnung schwenkbar ist.

Um rückzuleitendes Verteilgut auslassnah ableiten zu können, kann der Rückführtrichter vorteilhafterweise einen maximalen Durchmesser und/oder einen Durchmesser am oberen Rand besitzen, der im Wesentlichen dem maximalen Durchmesser der Verteilerkammer entspricht, insbesondere etwa dem Durchmesser, an welchem umfangsseitig die zu den Ausbringelementen führenden Auslässe der Verteilerkammer angeordnet sind. In Weiterbildung der Erfindung kann der maximale Durchmesser des Trichters etwa 80% bis 100% des maximalen Durchmessers der Verteilerkammer entsprechen.

Um die Mitnahme der rückgeführten Verteilgutpartikel im Steigrohr zu unterstützen, ist es vorteilhaft, die Vertikalkomponente der Bewegungsgeschwindigkeit der rückgeführten Verteilgutpartikel am Eintritt in das Steigrohr möglichst klein zu halten. Um dies zu erreichen, kann es vorteilhaft sein, das Verhältnis von Trichterdurchmesser zu Trichterhöhe in einem Bereich zwischen 2:3 bis 5:3, vorzugsweise etwa 1:1 bis 5:3 zu halten. Hierdurch kann einerseits die Fallhöhe des rückgeführten Verteilguts von der Verteilerkammer bis zur Einspeisestelle am Steigrohr relativ klein gehalten werden, andererseits ist das Trichtervolumen groß genug, um die über die Bypassöffnungen rückgeführte Förderluft bzw. Druckluft ausreichend abzubremsen bzw. zu expandieren, um ein gegenläufiges Einblasen des rückgeführten Verteilguts in das Steigrohr zu verhindern.

Um das Mitreißen des rückgespeisten Verteilguts im Steigrohr weiter zu unterstützen, kann das Steigrohr im Bereich des unteren Endes des Trichters ein Düsenelement umfassen, welches die Strömungsgeschwindigkeit im Steigrohr im Bereich des Einleitens des rückgeführten Verteilguts erhöht.

Die Erfindung wird nachfolgend anhand bevorzugter Ausführungsbeispiele und zugehöriger Zeichnungen näher erläutert. In den Zeichnungen zeigen:
- Fig. 1:: eine schematische, perspektivische Darstellung einer landwirtschaftlichen, pneumatischen Verteilmaschine in Form einer Sämaschine nach einer vorteilhaften Ausführung der Erfindung,
- Fig. 2:: eine schematische Darstellung des Wegs des Saatgutaustrags und der hierbei wirksamen Maschinenkomponenten der Sämaschine aus Fig. 1,
- Fig. 3:: eine Schnittansicht durch den Verteilerkopf der Sämaschine aus den vorhergehenden Figuren, die den das Steigrohr des Verteilerkopfes umschließenden Trichter zur internen Rückführung des Saatguts von gesperrten Auslässen zeigt, und
- Fig. 4:: eine Schnittansicht eines Verteilerkopfes nach einer alternativen Ausführung der Erfindung, bei der der Trichter über ein Trichterrohr weiter nach unten gezogen ist und tiefer am Steigrohr mündet als dies bei der Ausführung nach Fig. 3 der Fall ist.

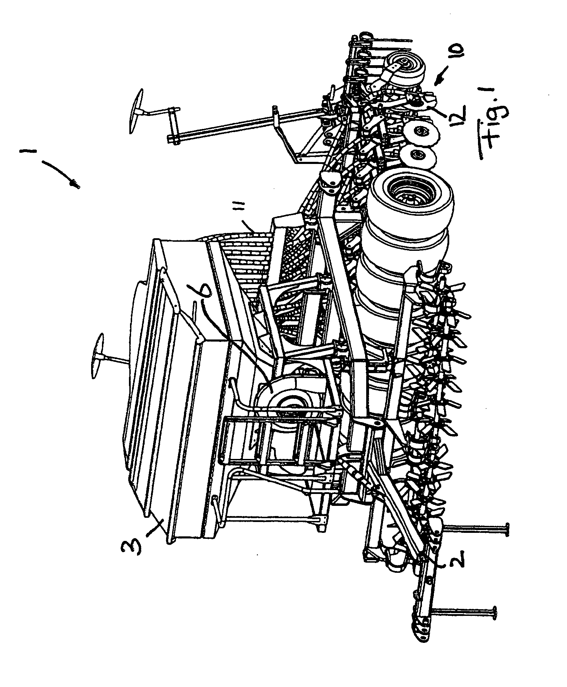

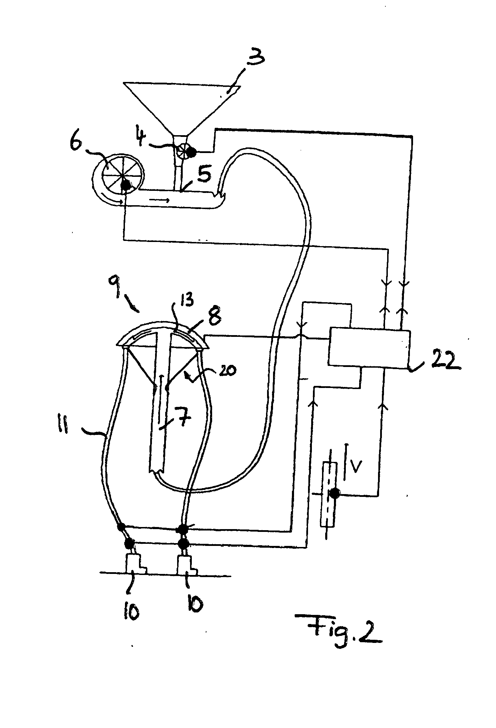

Wie Fig. 1 und 2 zeigen, kann die beispielsweise über ein Anbauelement 2 an einen Schlepper anbaubare Sä- und/oder Düngemaschine 1 einen Verteilgutspeicher 3 umfassen, aus dem durch eine zentrale Dosiervorrichtung 4, beispielsweise umfassend einen Dosierrotor, eine gewünschte Verteilgutmenge in Form von Samenkörnern, Düngemittelkörnern oder dergleichen in einen Förderkanal 5 gegeben werden kann. Mittels eines mit dem Förderkanal 5 verbindbaren Gebläses 6 oder einer anderen Druckluftvorrichtung kann das von der Dosiervorrichtung 4 bereitgestellte Verteilgut über den Förderkanal 5 und ein damit verbundenes aufrechtes, zentrales Steigrohr 7 pneumatisch in die Verteilerkammer 13 eines Verteilerkopfes 8 eines Saatgutverteilers 9 gefördert werden. Der genannte Verteilerkopf 8 verteilt das ankommende Verteilgut auf eine Mehrzahl von Ausbringelementen 10, mit denen der Verteilerkopf 8 jeweils über Ausbringleitungen bzw. -schläuche 11 verbunden ist. Die genannten Ausbringleitungen 11 sind mit Auslässen 14 des Verteilerkopfes 8 und über diese Auslässe 14 mit der Verteilerkammer 13 verbunden. Die Ausbringelemente 10 der Sä- und/oder Düngemaschine 1 können beispielsweise Säschare 12 umfassen, vgl. Fig. 1.

Wie Fig. 2 zeigt, kann eine Steuereinrichtung 22 über diverse Erfassungseinrichtungen Betriebsparameter an den verschiedenen Maschinenkomponenten, beispielsweise Taktung der Dosiervorrichtung oder Drehzahl des Gebläses 6, und/oder das Ergebnis betreffende Ausbringparameter wie beispielsweise abgegebene Körnerzahl überwachen, um in Abhängigkeit dieser Betriebs- und Ausbringparameter die Maschinenkomponenten zu steuern.

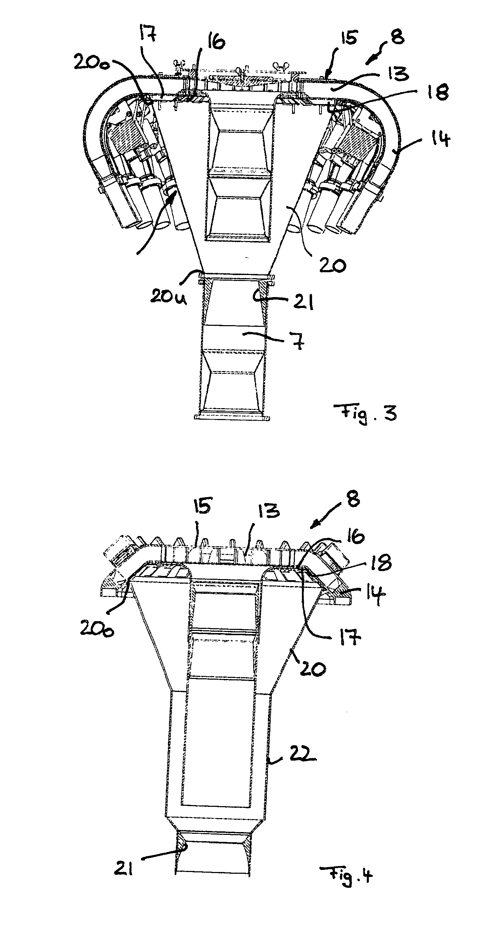

Der Verteilerkopf 8 umfasst einen insgesamt - grob gesprochen - pilzförmigen Verteilerkorpus 15, der gehäuseartig ausgebildet ist und in seinem Inneren die Verteilerkammer 13 begrenzt, die insbesondere rund, leicht tellerförmig gewölbt ausgebildet sein kann, vgl. Fig. 3. Das Steigrohr 7 bildet ein senkrecht angeordnetes Zuführrohr, das zentral, mittig von unten her in die genannte Verteilerkammer 13 mündet, so dass durch einen entsprechenden Luftstrom über das genannte Steigrohr 7 das Verteilgut wie Saatgut, Dünger oder ähnliche körnige Stoffe in die Verteilerkammer 13 eingeblasen werden können. In der genannten Verteilerkammer 13 prallen die Verteilgutkörner zunächst gegen die der Mündung des Steigrohrs 7 gegenüber angeordnete Deckenwandung, von wo aus sie sich radial nach außen verteilen.

Am radial außen liegenden Rand, insbesondere der dort vorgesehenen Umfangswandung, besitzt der Verteilkorpus 15 über den Umfang verteilt eine Vielzahl von Auslassöffnungen bzw. Auslässen 14, die - grob gesprochen - radial, ggf. leicht nach unten geneigt vom Verteilerkorpus 15 abgehen.

Im Boden 16 des Verteilerkorpus 15 sind jeweils vor den genannten Auslässen 14 Bypassöffnungen 17 ausgebildet, die entlang eines Kranzes am äußeren Rand des Verteilerkorpusbodens 16 angeordnet sind. Den genannten Bypassöffnungen 17 und den zugehörigen Auslässen 14 sind jeweils schwenkbar gelagerte Klappen 18 zugeordnet, die zwischen einer die Auslässe 14 versperrenden Stellung und einer die Bypassöffnungen 17 verschließenden Stellung hin und her schwenkbar sind, so dass jeweils nur eine Öffnung eines Auslass- und Bypassöffnungspaares geöffnet ist. Grundsätzlich kann jedem Auslass 14 eine Bypassöffnung 17 zugeordnet sein, wobei je nach Anforderungen an die Abschaltung ggf. auch nur einem Teil, beispielsweise jedem zweiten Auslass 14 eine Bypassöffnung 17 zugeordnet sein kann. Vorteilhafterweise ist hierbei jeder Bypassöffnung 17 ein eigenes Verschlusselement bzw. eine eigene Klappe 18 zugeordnet, die vorteilhafterweise individuell betätigbar ausgebildet ist, so dass jede Bypassöffnung 17 mit zugehörigem Auslass 14 unabhängig von anderen Bypassöffnungen bzw. Auslässen verschließbar und freigebbar ist. Gegebenenfalls kann aber auch hier eine gruppenweise Zusammenfassung oder auch eine Zusammenfassung aller Verschlusselemente vorgesehen sein, wobei jedoch eine individuelle Betätigbarkeit bevorzugt ist, um Einzel- oder Gruppenabschaltungen individuell vornehmen zu können. Hierdurch können beispielsweise ein Fahrgassenschaltung vorgenommen werden, bei der die in einer Fahrgasse angeordneten Ausbringelemente abgesperrt werden, oder eine Halbseitenabschaltung, bei der eine Hälfte der Ausbringelemente beispielsweise auf einer rechten Seite der Sämaschine komplett abgeschaltet werden. Andere Abschaltungsvarianten sind möglich und von der Steuereinrichtung 22 realisierbar, welche die Klappen 18 bzw. Verschlusselemente und deren zugehörige Aktoren ansteuern kann.

Zur Rückführung der durch eine oder mehrere Bypassöffnungen 17 bodenseitig aus der Verteilerkammer 13 austretenden Körner in den Zuführkreislauf umfasst eine hierfür vorgesehene Rückführeinrichtung 19 einen Trichter 20, der das Steigrohr 7 umschließt, so dass sich das Steigrohr 7 mit seinem oberen Teil im Inneren des vom Trichter 20 umschlossenen Trichterraums erstreckt. Mit seinem oberen Rand 20o schließt der genannte Trichter 20 an den Boden des Verteilerkorpus 15 an, während das untere Ende 20u des Trichters 20 in das Steigrohr 7 mündet bzw. in dieses übergeht. Der obere Rand 20o des Trichters 20 entspricht in seinem Durchmesser im Wesentlichen dem maximalen Durchmesser der Verteilerkammer 13 bzw. dem Durchmesser, an welchem die Auslässe 14 von der Verteilerkammer 13 abgehen. Der genannte obere Rand 20o kann hierbei fest mit dem Boden 16 des Verteilerkorpus 15 verbunden sein, beispielsweise durch eine Steckverbindung.

Der Trichter 20 kann vorteilhafterweise kegelförmig, insbesondere kreiskegelförmig ausgebildet sein und sich je nach Gegebenheiten mit unterschiedlichen Kegelwinkeln nach oben hin zum Verteilerkorpus 15 aufweiten, wobei nach einer vorteilhaften Weiterbildung der Erfindung der Trichter 20 eine Aufweitung unter einem Kegelwinkel von 2x15° bis 2x50°, insbesondere etwa 2x25° bis 2x35° besitzen kann.

An seinem unteren Ende 20u ist der Trichter 20 fest mit dem Steigrohr 7 verbunden, insbesondere mit dessen unterem Teil bzw. kann der Trichter 20 in den unteren Teil des Steigrohrs 7 übergehen bzw. auslaufen. Der obere Teil des Steigrohrs 7 ist an der Einmündungsstelle des Trichters 20 durch einen ringförmigen Spalt vom unteren Teil des Steigrohrs 7 getrennt, so dass umfangsseitig vom Trichter 20 her rückgeführtes Verteilgut in das Steigrohr 7 gelangen kann.

Wie Fig. 3 zeigt, kann das Steigrohr 7 an der Einmündungsstelle des Trichters 20 bzw. unmittelbar unterhalt hiervon ein Düsenelement 21 umfassen, welches einerseits die Strömungsgeschwindigkeit im Bereich der Einleitung der rückgeführten Verteilgutkörner erhöht und andererseits den Luftstrom in den oberen Teil des Steigrohrs 7 leitet, um zu verhindern, dass Gebläseluft aus dem unteren Teil des Steigrohrs 7 in den Trichter 20 gelangt.

Wie Fig. 4 zeigt, kann der Trichter 20 an seinem unteren Ende auch eine rohrförmige und/oder zylindrische Trichterverlängerung 22 aufweisen, die ebenfalls das Steigrohr 7 umschließt, so dass zwischen Steigrohr 7 und Trichterverlängerung 22 ein ringförmiger Spalt gebildet ist, in dem das rückgeführte Verteilgut nach unten rieseln kann, vgl. Fig. 4.

## Patentansprüche

1. Verteilerkopf für eine landwirtschaftliche Verteilmaschine, insbesondere Sä- und/oder Düngemaschine (1), zum pneumatischen Verteilen von Verteilgut wie Saatgut, Dünger oder dergleichen, mit einem aufrechten, zentralen Steigrohr (7) zum Zuführen des Verteilguts in eine vorzugsweise pilzkopfförmige Verteilerkammer (13), von der über den Umfang der Verteilerkammer (13) verteilt eine Mehrzahl von Auslässen (14) abgeht, die vom Verteilerkopf (8) weg zu Ausbringelementen (10) der Verteilmaschine führen, wobei zumindest ein Blockierelement zum wahlweisen Blockieren oder Freigeben zumindest eines Auslasses (14) und eine Rückführeinrichtung zum Rückführen des Verteilguts von einem blockierten Auslass (14) in das Steigrohr (7) vorgesehen ist, **dadurch gekennzeichnet, dass** die Rückführeinrichtung von einem das Steigrohr (7) umgebenden Trichter (20) gebildet ist, der mit seinem oberen Rand (20o) an die Verteilerkammer (13) anschließt und mit seinem unteren Ende (20u) in das Steigrohr (7) übergeht, so dass ein oberer Teil des Steigrohrs (7) im Inneren der Trichterkammer liegt.

2. Verteilerkopf nach dem vorhergehenden Anspruch, wobei der obere Rand (20o) des Trichters (20) an einem äußeren Randabschnitt der Verteilerkammer (13), insbesondere einen die Verteilerkammer nach unten hin begrenzenden Verteilerkammerboden (16), anschließt, wobei die Verteilerkammer (13) radial innerhalb des oberen Trichterrands (20o) bodenseitige Bypassöffnungen (17) besitzt, die in den von dem Trichter (20) umschlossenen Trichterraum münden.

3. Verteilerkopf nach dem vorhergehenden Anspruch, wobei den Bypassöffnungen (17) Verschlusselemente (18) zugeordnet sind, die in Abhängigkeit der Stellung der Blockierelemente gesteuert sind derart, dass bei einem blockierten Blockierelement eine zugehörige Bypassöffnung (17) geöffnet und bei nicht blockiertem Blockierelement eine zugehörige Bypassöffnung (17) verschlossen ist.

4. Verteilerkopf nach dem vorhergehenden Anspruch, wobei die Verschlusselemente und die Blockierelemente gemeinsam jeweils von verstellbaren Ventilelementen, vorzugsweise in Form von Klappen (18), gebildet sind, die nach Art einer Weise zwischen zwei Stellungen hin und her schaltbar sind derart, dass in einer ersten Stellung ein zugehöriger Auslass (14) geöffnet und eine zugehörige Bypassöffnung (17) geschlossen und einer zweiten Stellung der zugehörige Auslass (14) geschlossen und die zugehörige Bypassöffnung (17) geöffnet ist.

5. Verteilerkopf nach einem der vorhergehenden Ansprüche, wobei der obere Trichterrand (20o) spaltfrei mit dem Boden (16) der Verteilerkammer (13) verbunden ist.

6. Verteilerkopf nach einem der vorhergehenden Ansprüche, wobei der maximale Durchmesser des oberen Rands (20o) des Trichters (20) im Wesentlichen dem maximalen Durchmesser der Verteilerkammer (13) entspricht.

7. Verteilerkopf nach einem der vorhergehenden Ansprüche, wobei das Verhältnis von maximalem Trichterdurchmesser zu Trichterhöhe zwischen 2:3 bis 5:3, vorzugsweise 1:1 bis 5:3, beträgt.

8. Verteilerkopf nach einem der vorhergehenden Ansprüche, wobei das Steigrohr (7) an der Einmündung des Trichters (20) ein Düsenelement (21) aufweist.

## Claims

1. A distributor head for an agricultural distributor machine, in particular a sowing and/or fertilizing machine (1), for the pneumatic distribution of distribution product such as seeds, fertilizer or the like, comprising an upright, central riser pipe (7) for supplying the distribution product into a preferably mushroom head-shaped distributor chamber (13), from where a plurality of outlets (14) lead off which are distributed over the periphery of the distributor chamber (13) and which lead away from the distributor head (8) to discharge elements (10) of the distributor machine, wherein at least one blocking element is provided for a selective blocking or release of at least one outlet (14) and one return line is provided for returning the distribution product from a blocked outlet (14) into the riser pipe (7), **characterized in that** the return device is formed by a funnel (20) which surrounds the riser pipe (7), whose upper rim (20o) adjoins the distributor chamber (13) and whose lower end (20u) merges into the riser pipe (7) so that an upper part of the riser pipe (7) lies in the interior of the funnel chamber.

2. A distributor head in accordance with the preceding claim, wherein the upper rim (20o) of the funnel (20) adjoins an outer rim section of the distributor chamber (13), in particular a distributor chamber base (16) downwardly bounding the distributor chamber, wherein the distributor chamber (13) has base-side bypass openings (17) radially within the upper funnel rim (20o) which open into the funnel space surrounded by the funnel (20).

3. A distributor head in accordance with the preceding claim, wherein closure elements (18) are associated with the bypass openings (17) and are controlled in dependence on the position of the blocking elements such that with a blocked blocking element, an associated bypass opening (17) is open and with a non-blocked blocking element, an associated bypass opening (17) is closed.

4. A distributor head in accordance with the preceding claim, wherein the closure elements and the blocking elements are together formed in each case by adjustable valve elements, preferably in the form of flaps (18), which can be switched to and fro in a manner between two positions such that, in a first position, an associated outlet (14) is open and an associated bypass opening (17) is closed and, in a second position, the associated outlet (14) is closed and the associated bypass opening (17) is open.

5. A distributor head in accordance with one of the preceding claims, wherein the upper funnel rim (20o) is connected to the base (16) of the distributor chamber (13) without a gap.

6. A distributor head in accordance with one of the preceding claims, wherein the maximum diameter of the upper rim (20o) of the funnel (20) substantially corresponds to the maximum diameter of the distributor chamber (13).

7. A distributor head in accordance with one of the preceding claims, wherein the ratio of maximum funnel diameter to funnel height amounts to between 2:3 to 5:3, preferably 1:1 to 5:3.

8. A distributor head in accordance with one of the preceding claims, wherein the riser pipe (7) has a nozzle element (21) at the opening of the funnel (20).

## Revendications

1. Tête de répartition pour une machine de répartition agricole, en particulier une machine à semence et/ou à engrais (1), destinée à la répartition pneumatique de matières à répartir telles que des semences, de l'engrais ou similaires, comprenant un tuyau de montée (7) central vertical destiné à alimenter les matières à répartir dans une chambre de répartition (13) de préférence en forme de champignon, de laquelle partent plusieurs sorties (14) distribuées sur la circonférence de la chambre de répartition (13), qui conduisent en partant de la tête de répartition (8) à des éléments d'évacuation (10) de la machine de répartition, au moins un élément de blocage destiné à bloquer ou libérer de manière sélective au moins une sortie (14), et un dispositif de retour destiné à ramener les matières à répartir d'une sortie (14) bloquée dans le tuyau de montée (7) étant prévus, **caractérisée en ce que** le dispositif de retour est formé par une trémie (20) entourant le tuyau de montée (7), qui est raccordée avec son bord supérieur (20o) à la chambre de répartition (13) et se prolonge avec son extrémité inférieure (20u) en formant le tuyau de montée (7), de sorte qu'une partie supérieure du tuyau de montée (7) se trouve à l'intérieur de la chambre de trémie.

2. Tête de répartition selon la revendication précédente, dans laquelle le bord supérieur (20o) de la trémie (20) est raccordé à une partie de bord extérieure de la chambre de répartition (13), en particulier un fond de chambre de répartition (16) qui limite la chambre de répartition vers le bas, la chambre de répartition (13) possédant des ouvertures de dérivation (17) côté fond radialement dans le bord de trémie supérieur (20o), qui débouchent dans l'espace de trémie enfermé par la trémie (20).

3. Tête de répartition selon la revendication précédente, dans laquelle des éléments de fermeture (18) sont associés aux ouvertures de dérivation (17), lesquels sont commandés en fonction de la position des éléments de blocage de telle manière qu'en cas d'élément de blocage bloqué, une ouverture de dérivation (17) correspondante est ouverte et en cas d'élément de blocage non bloqué, une ouverture de dérivation (17) correspondante est fermée.

4. Tête de répartition selon la revendication précédente, dans laquelle les éléments de fermeture et les éléments de blocage sont formés ensemble respectivement par des éléments de vanne réglables, de préférence sous la forme de volets (18), qui peuvent être commutés entre deux positions à la façon d'un aiguillage de telle manière que dans une première position, une sortie (14) correspondante est ouverte et une ouverture de dérivation (17) correspondante est fermée et dans une seconde position la sortie (14) correspondante est fermée et l'ouverture de dérivation (17) correspondante est ouverte.

5. Tête de répartition selon l'une des revendications précédentes, dans laquelle le bord de trémie supérieur (20o) est relié sans fente au fond (16) de la chambre de répartition (13).

6. Tête de répartition selon l'une des revendications précédentes, dans laquelle le diamètre maximal du bord supérieur (20o) de la trémie (20) correspond essentiellement au diamètre maximal de la chambre de répartition (13).

7. Tête de répartition selon l'une des revendications précédentes, le rapport du diamètre de trémie maximal à la hauteur de trémie étant situé entre 2:3 et 5:3, de préférence entre 1:1 et 5:3.

8. Tête de répartition selon l'une des revendications précédentes, dans laquelle le tuyau de montée (7) comporte un élément de buse (21) à l'embouchure de la trémie (20).
